(19) Europäisches Patentamt
European Patent Office
Office européen des brevets

(11) EP 0 719 814 B1

(12) EUROPEAN PATENT SPECIFICATION

(45) Date of publication and mention of the grant of the patent:
**10.05.2000 Bulletin 2000/19**

(51) Int Cl.[7]: **C08G 64/30**

(21) Application number: **95308813.5**

(22) Date of filing: **06.12.1995**

# (54) A method for manufacturing polycarbonate

Verfahren zur Herstellung von Polycarbonat

Procédé pour la préparation de polycarbonate

(84) Designated Contracting States:
**BE DE ES FR GB IT NL**

(30) Priority: **28.12.1994 JP 32775894**

(43) Date of publication of application:
**03.07.1996 Bulletin 1996/27**

(73) Proprietor: **GENERAL ELECTRIC COMPANY**
**Schenectady, NY 12345 (US)**

(72) Inventors:
- **Sakashita, Takeshi**
  **Moka City, Tochigi Prefecture (JP)**
- **Nagai, Takashi**
  **Moka City, Tochigi Prefecture (JP)**
- **Shimoda, Tomoaki**
  **Moka City, Tochigi Prefecture (JP)**

(74) Representative: **Szary, Anne Catherine, Dr. et al**
**London Patent Operation,**
**GE International, Inc.,**
**Essex House,**
**12-13 Essex Street**
**London WC2R 3AA (GB)**

(56) References cited:
**EP-A- 0 520 805** **EP-A- 0 523 931**

- **DATABASE WPI Week 9410 Derwent Publications Ltd., London, GB; AN 94-080049 XP002016438 & JP-A-06 032 886 (NIPPON GE PLASTICS KK) , 8 February 1994**
- **DATABASE WPI Week 9210 Derwent Publications Ltd., London, GB; AN 92-076351 XP002016429 & JP-A-04 020 523 (NIPPON GE PLAS. KK) , 24 January 1992**
- **CHEMICAL ABSTRACTS, vol. 122, no. 24, 12 June 1995 Columbus, Ohio, US; abstract no. 291826, XP002016428 & JP-A-06 329 786 (TEIJIN LTD.) 29 November 1994**
- **DATABASE WPI Week 9516 Derwent Publications Ltd., London, GB; AN 95-118836 XP002016430 & JP-A-07 041 654 (NIPPON GE PLASTICS KK) , 10 February 1995 & US-A-5 514 767**

Remarks:
The file contains technical information submitted after the application was filed and not included in this specification

EP 0 719 814 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a method for manufacturing polycarbonate, and more specifically, to a method for manufacturing polycarbonate in which polycarbonate having outstanding color matching, retention stability during molding such as thermal stability and color-matching stability, transparency, and water resistance can be efficiently manufactured.

Polycarbonate has outstanding mechanical properties such as impact resistance, it is outstanding in thermal resistance, transparency, etc., and it is widely applied in products such as various machine components, optical discs, and automobile components.

This polycarbonate has conventionally been manufactured by the method of direct reaction of an aromatic dihydroxy compound such as bisphenol with phosgene (the surface method) or the method of an ester exchange reaction between an aromatic dihydroxy compound and a carbonic acid diester.

Between these two methods, the melt method offers the advantage of allowing cheaper manufacturing of polycarbonate than the surface method. Moreover, the melt method is also preferred from the standpoint of environmental hygiene, as it does not use toxic substances such as phosgene.

Moreover, in the conventional melt method, as the polycarbonate produced is exposed to high temperatures for long periods during the manufacturing process, the polycarbonate may undergo yellow discoloration.

Examples of inventions which have been proposed in order to solve these problems include the method for manufacturing polycarbonate of Japanese Laid-Open Patent Application No. 90-175723, in which a nitrogen-containing basic compound and a small amount of an alkali metal or alkaline earth metal were used in combination as a catalyst, and the method of Japanese Laid-Open Patent No. 93-9285. which involved the manufacture of polycarbonate using an even smaller amount of an alkali metal or alkaline earth metal as a catalyst.

Furthermore, in Japanese Laid-Open Patent Application No. 92-20523, a method for manufacturing polycarbonate was proposed in which, after an addition compound or a mixture of said addition compound and phenols was formed from 2,2-bis(4-hydroxyphenyl)propane (bisphenol A) and phenols, this substance was used as raw material bisphenol in a polycondensation reaction. In said manufacturing method proposed in Japanese Laid-Open Patent No. 92-20523 in particular, the use of the above-mentioned bisphenol A addition compound (or mixture) makes it possible to supply high-purity bisphenol A for the polycondensation reaction, thus making it possible to manufacture polycarbonate having outstanding color-matching properties.

However, this method has the drawback that the phenols which form addition compounds during polycondensation must be removed, causing the polycondensation process to become complex. Moreover, there are also practical limitations such as the fact that the phenols which form addition compounds are readily oxidized, causing them to undergo discoloration and resulting in problems with storage, shipping, and handling, making it necessary to carry out melt polycondensation immediately after the addition compounds are formed.

The present invention was developed in light of the above technological problems in order to provide a method for manufacturing polycarbonate in which, during melt polycondensation of the aromatic dihydroxy compound and the carbonic acid diester, a high-purity aromatic dihydroxy compound can be effectively subjected to the melt polycondensation reaction from the early reaction stage without making the polycondensation process difficult, and in which polycarbonate can be obtained which shows outstanding color matching, thermal stability, color-matching stability, etc., during molding, and outstanding water resistance.

The present invention provides a method for manufacturing polycarbonate which comprises melt polycondensing an aromatic dihydroxy compound and a carbonic acid diester in the presence of a polycondensation catalyst, comprising:

(a) forming an addition compound or a mixture of said addition compound and an aromatic hydroxy compound from an aromatic dihydroxy compound and an aromatic monohydroxy compound;
(b) adding an alkali metal compound or alkaline earth metal compound as a catalyst in a catalytic amount to the addition compound or the mixture;
(c) dispersing or dissolving the catalyst in the addition compound or the mixture;
(d) removing the aromatic monohydroxy compound from the addition compound or the mixture; and
(e) polycondensing the aromatic dihydroxy compound and the carbonic acid diester melt in the presence of the alkali metal compound or alkaline earth metal compound dissolved or dispersed in said aromatic dihydroxy compound to polycarbonate.

According to the method for manufacturing polycarbonate of the present invention, as the aromatic dihydroxy compound subjected to a melt polycondensation reaction is high in purity and contains a uniformly distributed catalyst, melt polycondensation can be carried out in a stable manner from the initial stage of the reaction, and one can effectively manufacture polycarbonate having outstanding color-matching properties.

In the present invention, it is preferable to use a combination of (a) an alkali metal compound and/or alkaline earth metal compound and (b) a nitrogen-containing basic compound as the polycondensation catalyst.

Moreover, in the method for manufacturing polycarbonate of the present invention,

while the [A] polycarbonate obtained as described above in the melt polycondensation reaction is in a molten state, [B] a sulfur-containing acidic compound having a pKa value of 3 or below and/or a derivative formed from said compound may be added in a molar amount greater by a factor of 1-20 than the catalytic amount of (a) the alkali metal compound and/or alkaline earth metal compound, and if necessary, [C] water may be added in the amount of 5-1,000 ppm with respect to the polycarbonate, after which kneading may be carried out.

The following is a specific explanation of the method for manufacturing polycarbonate of the present invention.

In the present invention,

(1) an addition compound or a mixture of said addition compound and an aromatic hydroxy compound (in the following, the addition compound or mixture is referred to simply as the addition compound) is formed from an aromatic dihydroxy compound and an aromatic monohydroxy compound,
(2) (a) an alkali metal compound and/or an alkaline earth metal compound is added as a catalyst to the addition compound or mixture obtained and then dispersed (or dissolved),
(3) the aromatic monohydroxy compound is removed from said addition compound or mixture, and
(4) the aromatic dihydroxy compound obtained is subjected to a melt polycondensation reaction, and in the presence of (a) the alkali metal compound and/or alkaline earth metal compound contained in said aromatic dihydroxy compound, the aromatic dihydroxy compound and a carbonic acid diester are subjected to melt polycondensation in order to manufacture the polycarbonate [A].

Fig. 1 shows a process flow diagram of the polycarbonate manufacturing method of the present invention.

The various components and catalysts used in the present invention will first be explained

<u>Aromatic dihydroxy compounds</u>

There are no particular restrictions on the aromatic dihydroxy compound used in the present invention, and an example is shown in formula [I] below.

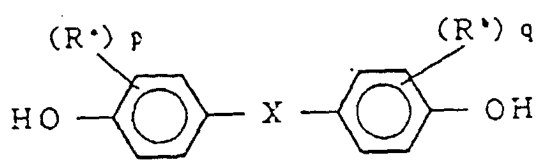

... [I]

In the formula, $R^a$ and $R^b$ are halogen atoms or monovalent hydrocarbon groups, and these may be identical or differentp and q are integers from 0-4.
X is

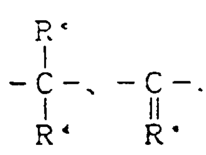

-O-, -S-, -SO-, or $-SO_2-$,
$R^c$ and $R^d$ are hydrogen atoms or monovalent hydrocarbon groups, and $R^e$ is a bivalent hydrocarbon group.)

Specific examples of the aromatic dihydroxy compound shown in Formula [I] include

a bis(hydroxyaryl)alkane such as bis(4-hydroxyphenyl)methane,
1,1-bis(4-hydroxyphenyl)ethane,
2,2-bis(4-hydroxyphenyl)propane,

2,2-bis(4-hydroxyphenyl)butane,
2,2-bis(4-hydroxyphenyl)octane,
bis(4-hydroxyphenyl)phenylmethane,
2,2-bis(4-hydroxy-1-methylphenyl)propane,
1,1-bis(4-hydroxy-t-butylphenyl)propane,
or 2,2-bis(4-hydroxy-3-bromophenyl)propane;
a bis(hydroxyaryl)cycloalkane such as 1,1-bis(4-hydroxyphenyl )cyclopentane or 1,1-bis(4-hydroxyphenyl)cyclohexane;
a dihydroxyaryl ether such as 4,4'-dihydroxydiphenyl ether or 4,4'-dihydroxy-3,3'-dimethylphenyl ether;
a dihydroxydiaryl sulfide such as 4,4'-dihydroxydiphenyl sulfide or 4,4'-dihydroxy-3,3'-dimethylphenyl sulfide;
a dihydroxydiaryl sulfoxide such as 4,4'-dihydroxydiphenyl sulfoxide or 4,4'-dihydroxy4,4'-dihydroxy-3,3'-dimethyldiphenyl sulfoxide;
or a dihydroxydiaryl sulfone such as 4,4'-dihydroxydiphenyl sulfone or 4,4'-dihydroxy-3,3'-dimethyldiphenyl sulfone.

Among these compounds, the use of 2,2-bis(4-hydroxyphenyl)propane (bisphenol A) is particularly preferred.
Moreover, the compound shown in Formula [II] below may also be used as the aromatic dihydroxy compound.

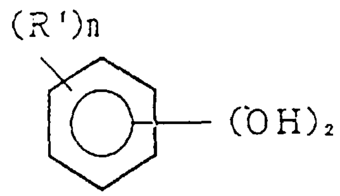

... [II]

(where $R^f$ is a halogen atom or a hydrocarbon group or halogen-substituted hydrocarbon group having a 1-10 carbon atoms and n is an integer from 0 to 4. When n is 2 or above, $R^f$ may be either identical or different.)
Specific examples of the aromatic dihydroxy compound shown in Formula [II] include resorcin and substituted resorcins such as 3-methylresorcinol, 3-ethylresorcinol, 3-propylresorcinol, 3-butylresorcinol, 3-t-butylresorcinol, 3-phenylresorcinol, 3-cumylresorcinol, 2,3,4,6-tetrafluororesorcinol, or 2,3,4,6-tetrabromoresorcinol;
catechol;
or a hydroquinone or a substituted hydroquinone such as 3-methylhydroquinone, 3-ethylhydroquinone, 3-propylhydroquinone, 3-butylhydroquinone, 3-t-butylhydroquinone, 3-phenylhydroquinone, 3-cumylhydroquinone, 2,3,5,6-tetramethylhydroquinone, 2,3,5,6-tetra-t-butylhydroquinone, 2,3,5,6-tetrafluorohydroquinone, or 2,3,5,6-tetrabromohydroquinone.
Moreover, in the present invention, the 2,2,2',2'-tetrahydro-3,3,3',3'-tetramethyl-1,1'-spirobis[IH-indene]-6,6'-diol shown in the following formula may also be used as the aromatic dihydroxy compound.

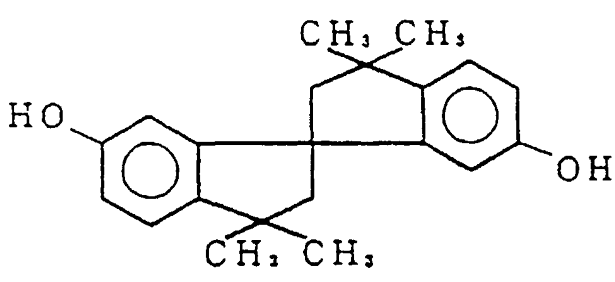

The aforementioned aromatic dihydroxy compound may also be a combination of 2 or more substances.
(1) In the present invention, an addition compound is formed from the aforementioned aromatic dihydroxy compound and the aromatic monohydroxy compound.
There are no particular restrictions on this aromatic monohydroxy compound, and provided that it is capable of forming the aforementioned aromatic dihydroxy compound and addition compound, any commonly-known aromatic monohydroxy compound may be used, but one should preferably use an aromatic monohydroxy compound as the raw

material for manufacturing said aromatic dihydroxy compound. As an example of this aromatic dihydroxy compound, bisphenol A may be synthesized from phenol and acetone, but an addition compound should preferably be formed from bisphenol A and phenol.

In forming this type of addition compound, the aromatic dihydroxy compound and aromatic monohydroxy compound may be used in a ratio of 1 : 1 to form an addition compound containing said aromatic dihydroxy compound and aromatic monohydroxy compound in a 1 : 1 ratio, or one may use a ratio of 1 : 1 to 1 : 50, and preferably 1 : 1 to 1 : 25, using the aromatic monohydroxy compound in an excess amount in order to form the mixture of the aforementioned addition compound and the aromatic hydroxy compound.

Both the addition compound and the mixture may be obtained in a solid state.

More specifically, for example, this addition compound may be formed by adding an excess amount of phenol to a reaction mixture containing bisphenol A obtained by dehydration condensation of phenol and acetone in the presence of a cation-exchange resin or an acidic catalyst such as a mineral acid, heating to 70-180°C in order to prepare a homogeneous solution, and cooling this solution to 30-70°C in order to precipitate a solid. The solid substance (addition compound) obtained in this manner may be washed with phenol.

(2) In the present invention, an (a) alkali metal compound and/or alkaline earth metal compound is next added as a catalyst in a catalytic amount to said addition compound of the aromatic dihydroxy compound and aromatic monohydroxy compound and then dispersed (dissolved).

Preferred specific examples of the (a) alkali metal compound or alkaline earth metal compound (referred to in the following as (a) the alkali compound) include salts of organic acids and bases, salts of inorganic acids and bases, oxides, hydroxides, hydrides, and alcoholates of alkali metals and alkaline earth metals.

More specifically, examples of the alkali metal compound include sodium hydroxide, potassium hydroxide, lithium hydroxide, sodium bicarbonate, potassium bicarbonate, lithium bicarbonate, sodium carbonate, potassium carbonate, lithium carbonate, sodium acetate, potassium acetate, lithium acetate, sodium stearate, potassium stearate, lithium stearate, sodium hydroxyborate, lithium hydroxyborate, sodium phenyl borate, sodium benzoate, potassium benzoate, lithium benzoate, disodium hydrogenphosphate, dipotassium hydrogenphosphate, dilithium hydrogenphosphate, disodium salts, dipotassium salts, and dilithium salts of bisphenol A, and sodium salts, potassium salts, and lithium salts of phenol, etc.

Furthermore, specific examples of the alkaline earth metal compound include calcium hydroxide, barium hydroxide, magnesium hydroxide, strontium hydroxide, calcium bicarbonate, barium bicarbonate, magnesium bicarbonate, strontium bicarbonate, calcium carbonate, barium carbonate, magnesium carbonate, strontium carbonate, calcium acetate, barium acetate, magnesium acetate, strontium acetate, and strontium stearate, etc.

These substances may be used in combinations of 2 or more.

In the present invention, the (a) alkali compound should be added to the addition compound of the aromatic dihydroxy compound and aromatic monohydroxy compound or the mixture of said addition compound and an aromatic monohydroxy compound in the amount of $5 \times 10^{-8}$ to $2 \times 10^{-6}$ moles with respect to 1 mole of the aforementioned aromatic dihydroxy compound, or preferably $1 \times 10^{-7}$ to $1.5 \times 10^{-6}$ moles, with the amount of $1 \times 10^{-7}$ to $1.2 \times 10^{-6}$ being especially preferable. Moreover, this amount should preferably be the same as the amount of the (a) alkali compound present in the polycondensation reaction system.

Specifically, trace amounts of (a) the alkali compound may be present in the raw materials as impurities, and in such cases, the total amount of (a) the alkali compound added as a catalyst and (a) the alkali compound present in the raw materials as an impurity should preferably be the amount mentioned above.

However, as the amount of (a) the alkali compound present in the raw material as an impurity may change depending on the raw material used, in order to accurately control the amount of (a) the alkali compound present in the reaction system, the raw materials should be purified in order to keep the amount of (a) the alkali compound contained in these raw materials as small as possible. For example, the amount of (a) the alkali compound contained in the various components of the raw material should be purified to 1 ppb or below as calculated by metal conversion before being used in the reaction.

The above-mentioned (a) alkali compound may be directly added to the addition compound, it may be added in the form of a salt of or solution in the aromatic dihydroxy compound or aromatic monohydroxy compound, or it may be removed prior to the melt polycondensation process, mixed with a solvent which does not contain residual impurities, and then added.

If the (a) alkali compound is added in the form of a salt of or solution in the aromatic dihydroxy compound or aromatic monohydroxy compound, the dispersion of the catalyst may be increased.

Moreover, the (a) alkali compound may be added to the addition compound in a solid or molten state, and the addition compound may also be made into a solution using a solvent before being added.

(3) In the present invention, the aromatic monohydroxy compound is removed from the addition compound to which a catalyst has been added as described above.

Specifically, heated inert gas is blown into the addition compound, the addition compound is heated at reduced

pressure, or these methods are combined and the aromatic monohydroxy compound is removed. The heating temperature of the addition compound or the inert gas should be as low as possible, and in the case of an addition compound of bisphenol A and phenol, for example, it should be 200°C or less.

Among these various methods, the aromatic monohydroxy compound should preferably be removed in combination with low-temperature heating of the addition compound at reduced pressure or blowing of an inert gas.

The purity of the aromatic dihydroxy compound from which the aromatic monohydroxy compound has been removed in this manner should be 99% by weight or above as measured by high-performance liquid chromatography (HPLC), with purity of 99.5% by weight or above being even more preferable.

In the present invention, as a high-purity aromatic dihydroxy compound and a carbonic acid diester are subjected to melt polycondensation, it is possible to obtain a polycarbonate having favorable color-matching properties.

Moreover, the aromatic dihydroxy compound treated in this manner already contains the (a) alkali compound which is the melt polycondensation catalyst. The (a) alkali compound used as a catalyst in the present invention is used in an extremely small amount, but as mentioned above, as it is already thoroughly dispersed in the aromatic dihydroxy compound, the melt polycondensation reaction between the aromatic dihydroxy compound and the carbonic acid diester can be carried out in the presence of a small amount of the uniformly-distributed catalyst.

Moreover, when this type of aromatic dihydroxy compound already containing (a) the alkali compound is used, compared to conventional methods in which (a) an alkali compound is directly added to a mixed solution of an aromatic dihydroxy compound and a carbonic acid diester, the production of byproducts which cause discoloration is inhibited from the initial stage of the melt polycondensation reaction between the aromatic dihydroxy compound and the carbonic acid diester, thus making it possible to obtain a polycarbonate having outstanding initial tone immediately after polycondensation.

Moreover, the aforementioned method of manufacturing an aromatic dihydroxy compound by removing the aromatic monohydroxy compound from the addition compound of an aromatic dihydroxy compound and an aromatic monohydroxy compound or a mixture of said addition compound and an aromatic monohydroxy compound is presented in the aforementioned Japanese Laid-Open Patent No. 92-20523.

In the present invention, the aromatic dihydroxy compound and the carbonic acid diester are subjected to melt polycondensation as described above.

<u>Carbonic acid diesters</u>

Moreover, specific examples of the carbonic acid diester include

diphenyl carbonate,
ditolyl carbonate,
bis(chlorophenyl) carbonate,
m-cresyl carbonate,
dinaphthyl carbonate,
bis(diphenyl) carbonate,
diethyl carbonate,
dimethyl carbonate,
dibutyl carbonate,
and dicyclohexyl carbonate.

Of these substances; diphenyl carbonate should preferably be used.

These carbonic acid diesters may be used individually or in combination.

The carbonic acid diester used in the present invention should preferably contain a dicarboxylic acid or dicarboxylic acid ester. Specifically, the carbonic acid diester should preferably contain 50 mole % or less of dicarboxylic acid or dicarboxylic acid ester, with a content of 30 mole % or less being particularly preferable.

Examples of this dicarboxylic acid or dicarboxylic acid ester include

aromatic carboxylic acids such as terephthalic acid, isophthalic acid, diphenyl terephthalate, or diphenyl isophthalate;

aliphatic dicarboxylic acids such as succinic acid, glutaric acid, adipic acid, pimelic acid, suberic acid, azelaic acid, sebacic acid, decanedioic acid, dodecanedioic acid, diphenyl sebacate, diphenyl decanedioate, or diphenyl dodecanedioate;

and aliphatic dicarboxylic acids such as dichloropropanedicarboxylic acid, 1,2-cyclopropanedicarboxylic acid, 1,3-cyclobutanedicarboxylic acid, 1,2-cyclopentanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid,

diphenyl cyclopropanedicarboxylate, diphenyl 1,2-cyclobutanedicarboxylate, diphenyl 1,3-cyclobutanedicarboxylate, diphenyl 1,2-cyclopentanedicarboxylate, diphenyl 1,2-cyclopentanedicarboxylate, diphenyl 1,2-dicyclohexanedicarboxylate, diphenyl 1,3-cyclohexanedicarboxylate, or diphenyl 1,4-cyclohexanedicarboxylate.

The carbonic acid diester may contain 2 or more of these dicarboxylic acids or dicarboxylic acid esters.

In the present invention, in polycondensation of the carbonic acid diester and aromatic dihydroxy compound as described above, one should ordinarily use 1.0-1.30 moles of the carbonic acid diester for each mole of the aromatic dihydroxy compound, with an amount of 1.01-1.20 moles being particularly preferred.

Moreover, in manufacturing polycarbonate by the method of the present invention, together with the aforementioned aromatic dihydroxy compound and carbonic acid diester, a multifunctional compound having three or more functional groups per molecule may also be used.

A compound having a phenolic hydroxyl group or a carboxyl group should preferably be used as this multifunctional compound, with compounds containing three phenolic hydroxyl groups being particularly preferred. Specific examples of this multifunctional compound include

1,1,1-tris(4-hydroxyphenyl)ethane,
2,2',2"-tris(4-hydroxyphenyl)diisopropylbenzene,
α-methyl-α,α',α'-tris(4-hydroxyphenyl)-1,4-diethylbenzene,
α,α',α"-tris(4-hydroxyphenyl)-1,3,5-triisopropylbenzene,
phloroglucinol,
4,6-dimethyl-2,4-6-tri(4-hydroxyphenyl)-heptane-2 [sic],
1,3,5-tris(4-hydroxyphenyl)benzene,
2,2-bis-[4,4-(4,4'-dihydroxyphenyl)cyclohexyl]propane [sic],
trimellitic acid,
1,3,5-benzenetricarboxylic acid,
and pyromellitic acid.

Of these compounds, the use of 1,1,1-tris(4-hydroxyphenyl)ethane or α,α'-α"-tris(4-hydroxyphenyl)-1,3,5-triisopropylbenzene, etc., is particularly preferred.

This type of multifunctional compound should preferably be present in the amount of 0.03 moles or less with respect to 1 mole of the aromatic dihydroxy compound, and more preferably in the amount of 0.001-0.02 moles, with 0.001-0.01 moles being particularly preferred.

In manufacturing the polycarbonate, the aforementioned aromatic dihydroxy compound and the carbonic acid diester may be used in a solid state, or they may be subjected to the reaction in a molten state directly from the manufacturing device.

In the present invention, the aforementioned aromatic dihydroxy compound and carbonic acid diester are subjected to melt polycondensation in the presence of (a) an alkali compound catalyst contained in the aromatic dihydroxy compound.

In the present invention, a (b) basic compound should preferably be used in combination with the aforementioned (a) alkali compound as the melt polycondensation catalyst.

For example, one may use a nitrogen-containing basic compound which decomposes readily or is volatile at high temperatures as this (b) basic compound, with specific examples including the following compounds:

Ammonium hydroxides having alkyl, aryl, and aralkyl groups, such as tetramethylammonium hydroxide ($Me_4NOH$), tetraethylammonium hydroxide ($Et_4NOH$), tetrabutylammonium hydroxide ($Bu_4NOH$), and trimethylbenzylammonium hydroxide ($\phi$-$CH_2(Me)_3NOH$), etc.,

tertiary amines such as trimethylamine, triethylamine, dimethylbenzylamine, triphenylamine, trioctylamine, tridodecylamine, and trioctadecylamine,
secondary amines indicated by the formula $R_2NH$ (in the formula, R indicates an alkyl group such as methyl or ethyl or an aryl group such as phenyl or tolyl),
primary amines indicated by the formula $RNH_2$ (in the formula, R has the same meaning as indicated above),
pyridines such as 4-dimethylaminopyridine, 4-diethylaminopyridine, and 4-pyrrolidinopyridine,
imidazoles such as 2-methylimidazole, 2-phenylimidazole, and 2-dimethylaminoimidazaole,
or basic salts such as ammonia, tetramethylammonium borohydride ($Me_4NBH_4$), tetrabutylammonium borohydride ($Bu_4NBH_4$), tetrabutylammonium tetraphenylborate ($Bu_4NBPh_4$), and tetramethylammonium tetraphenylborate ($Me_4NBPh_4$).

Of these substances, tetraalkylammonium hydroxides, particularly tetraalkylammonium hydroxides for electronic use which have a low content of metal impurities, are particularly preferable.

The aforementioned (b) nitrogen-containing basic compound should be included in the amount of $10^{-6}$ to $10^{-1}$ moles, or preferably $10^{-5}$ to $10^{-2}$ moles, with respect to 1 mole of the aromatic dihydroxy compound.

Moreover, (c) a boric acid compound may also be used as the catalyst.

Examples of this type of (c) boric acid compound include boric acid and boric acid esters.

As an example of a boric acid ester, one can mention a boric acid ester having the following general formula.

$$B(OR)_n(OH)_{3-n}$$

In the formula, R indicates an alkyl group such as methyl or ethyl or an aryl group such as phenyl, and n is the integer 1, 2, or 3.

Specific examples of this boric acid ester include trimethyl borate, triethyl borate, tributyl borate, trihexyl borate, triheptyl borate, triphenyl borate, tritolyl borate, and trinaphthyl borate.

The (c) boric acid or boric acid ester used as a catalyst should be used in the amount of $10^{-8}$ to $10^{-1}$ moles, and preferably $10^{-7}$ to $10^{-2}$ moles, with respect to 1 mole of the aromatic dihydroxy compound, with the amount of $10^{-6}$ to $10^{-4}$ moles being particularly preferred.

Accordingly, in the present invention, as the melt polycondensation catalyst, one should preferably use a combination of

(a) an alkali compound and
(b) a nitrogen-containing basic compound,

or

(a) an alkali compound,
(b) a nitrogen-containing basic compound, and
(c) boric acid or boric acid ester.

This (b) nitrogen-containing basic compound and (c) boric acid or boric acid ester may be added to the melt polycondensation reaction system (a mixed solution of aromatic dihydroxy compound and carbonic acid diester).

It is preferred to use a combination of (a) an alkali compound and (b) a nitrogen-containing basic compound in the above-mentioned amounts as a catalyst, as this allows the polycondensation reaction to be carried out at a sufficient rate, and high-molecular-weight polycarbonate with a high degree of polymerization can therefore be produced.

In the presence of these catalysts, the polycondensation reaction between the aromatic dihydroxy compound and the carbonic acid diester may be carried out under the same conditions as those conventionally known for polycondensation reactions.

Specifically, in a first stage reaction, the organic dihydroxy compound and the carbonic acid diester are reacted at 80-250°C, or preferably 100-230°C, with the temperature range of 120-190°C being particularly preferred, for a period of 0-5 hours, or preferably, 0-4 hours, with the period of 0-3 hours being particularly preferred, under normal pressure. Next, the reaction temperature is increased while maintaining the reaction system at reduced pressure, the aromatic dihydroxy compound and carbonic acid diester are reacted, and finally, melt polycondensation of the aromatic dihydroxy compound and the carbonic acid diester is carried out at reduced pressure of 5 mmHg or less, and preferably 1 mmHg or less, at a temperature of 240-320°C.

The condensation polymerization reaction described above may be carried out continuously or according to the batch method. Moreover, the reaction equipment used in carrying out the above reaction may be of the tank type, the tube type, or the tower type.

The polycarbonate obtained as the reaction product of a reaction conducted as described above ordinarily has an intrinsic viscosity, measured in methylene chloride at 20°C, of 0.10-1.0 dl/g, and preferably 0.30-0.65 dl/g.

As manufacturing of the polycarbonate of the present invention as described above does not use toxic substances such as phosgene and methylene chloride, this method is preferable from an environmental standpoint.

The polycarbonate which is the reaction product obtained as described above (referred to in the following as polycarbonate [A]) shows outstanding color-matching properties in the initial stage.

In the present invention, one should preferably add, as described below, [B] a sulfur-containing acidic compound having a pKa value of 3 or below and/or a derivative formed from said acidic compound (referred to below as [B] the acidic compound) immediately after the polycondensation reaction, without cooling the aforementioned [A] polycarbonate obtained as the reaction product.

Moreover, [C] a specified amount of water should preferably be added together with [B] the acidic compound.
In the present invention, examples of [B] the sulfur-containing acidic compound or the derivative formed from said acidic compound include sulfurous acid, sulfuric acid, sulfinic acid-class compounds, sulfonic acid compounds, and their derivatives. Specific examples include the following:

sulfurous acid derivatives such as dimethyl sulfite, diethyl sulfite, dipropyl sulfite, dibutyl sulfite, and diphenyl sulfite;
sulfuric acid derivatives such as dimethyl sulfate, diethyl sulfate, dipropyl sulfate, dibutyl sulfate, and diphenyl sulfate; and
sulfinic acid-class compounds such as benzenesulfinic acid, trienesulfinic acid, and naphthalenesulfinic acid.

Moreover, an example of the sulfonic acid-class compound or its derivative is the compound shown in General Formula [III] below or an ammonium salt thereof.

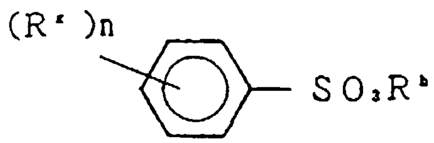

··· [III]

In the formula, $R^g$ is a hydrocarbon group or halogen-substituted hydrocarbon group having 1-50 carbon atoms, $R^h$ is a hydrogen atom or a hydrocarbon group or halogen-substituted hydrocarbon group having 1-50 carbon atoms, and n is an integer from 0-3.
Examples of this sulfonic acid-class compound or derivative thereof include sulfonates such as benzenesulfonate and p-toluenesulfonate, sulfonic acid esters such as methyl benzenesulfonate, ethyl benzenesulfonate, butyl benzenesulfonate, octyl benzenesulfonate, and phenyl benzenesulfonate,

sulfonic acid esters such as methyl p-toluenesulfonate, ethyl p-toluenesulfonate, butyl p-toluenesulfonate, octyl p-toluenesulfonate, and phenyl p-toluenesulfonate,
and sulfonic acid ammonium salts such as ammonium p-toluenesulfonate.

Moreover, sulfonic acid compounds such as trifluoromethanesulfonic acid, naphthalenesulfonic acid, sulfonated polystyrene, and methyl acrylate-sulfonated styrene copolymer may also be used.
These substances may also be used in combinations of two or more.
In the present invention, one should preferably use the sulfonic acid-class compound shown in General Formula [III] above or a derivative thereof as [B] the acidic compound.
Specifically, one should preferably use an ester compound in which, in General Formula [III] above, $R^g$ indicates a substituted aliphatic hydrocarbon group having 1-6 carbon atoms, $R^h$ indicates a substituted aliphatic hydrocarbon group having 1-8 carbon atoms, and n indicates an integer from 0-3 . Specific preferred examples include ethyl benzenesulfonate, butyl benzenesulfonate, methyl p-toluenesulfonate, ethyl p-toluenesulfonate, and butyl p-toluenesulfonate.
Among these substances, methyl p-toluenesulfonate, ethyl p-toluenesulfonate, and butyl p-toluenesulfonate are particularly preferred.
These acidic compounds [B] may be used in combinations of two or more.
In the present invention, the aforementioned [B] acidic compound should be used in a molar amount greater by a factor of 1-20 than the amount of the (a) alkali compound used in the reaction of the aforementioned [A] polycarbonate, and preferably greater by a molar factor of 1-10, with a molar factor of 1-8 being particularly preferred.
By adding the acidic compound [B] to the reaction product (polycarbonate [A]) in the above amounts, the alkali metal compound remaining in the polycarbonate is neutralized or weakened, making it possible to obtain polycarbonate in which final retention stability and water-resistance are further improved.
Moreover, in the present invention, it is preferable to add the aforementioned [B] acidic compound together with [C] water in the amount of 5-1,000 ppm with respect to the polycarbonate [A], or preferably 10-500 ppm, with the amount of 20-300 ppm being particularly preferred.
When [C] water is added together with [B] the acidic compound in this manner, the neutralization efficacy of the [B] acidic compound which reacts with the remaining basic catalyst in [A] the polycarbonate is increased, making it possible to obtain polycarbonate which shows outstanding retention stability during melting and also has outstanding color matching, transparency, water resistance, and weather resistance properties.

Moreover, when more than 1,000 ppm of water is added, the polycarbonate becomes susceptible to hydrolysis, causing deterioration of the physical properties of the polycarbonate. In the present invention, the polycarbonate should preferably be obtained by adding the aforementioned [B] acidic compound and a small amount of [C] water to the [A] polycarbonate which is the reaction product and then kneading the mixture.

Kneading of the [A] polycarbonate, the [B] acidic compound, and [C] the water can be carried out using an ordinary kneading device such as a uniaxial extruder, a biaxial extruder, or a static mixer, and these mixing devices may be effectively used whether or not they are equipped with vents.

Specifically, the [B] acidic compound and [C] water should preferably be added while the [A] polycarbonate obtained by polycondensation is in the reactor or extruder in a molten state. The [B] acidic compound and [C] water may be added either separately or at the same time, and there are no restrictions on the order in which they are added, but simultaneous addition is preferred.

More specifically, in manufacturing polycarbonate from [A] polycarbonate, [B] an acidic compound, and [C] water, for example, after forming the polycarbonate by adding [B] the acidic compound and [C] water to the [A] polycarbonate obtained from the polycondensation reaction in the reactor, one may pelletize the polycarbonate using an extruder, and while the [A] polycarbonate obtained from the polycondensation reaction is passing from the reactor through the extruder and being pelletized, one may add [B] the acidic compound and [C] water and knead this mixture to obtain the polycarbonate.

Generally speaking, in using polycarbonate, polycarbonate pellets are re-melted and various additives such as thermal stabilizers are blended in. In the polycarbonate pellets obtained in the present invention, when the various additives are blended in, or even when melting is carried out during molding, as thermal stability is improved and retention stability during melting is outstanding, thermal decomposition due to melting in particular is inhibited, making the material resistant to decreases in molecular weight and discoloration.

Moreover, in the present invention, together with [B] the acidic compound and [C] water, [D] an additive may also be added to the polycarbonate [A], provided this does not have an adverse effect on the purpose of the invention.

This [D] additive may be added to the [A] polycarbonate which is in a molten state at the same time as [B] the acidic compound and [C] the water, or the various components may be added separately. In the present invention, among the [D] additives presented below, reactive additives should preferably be added after adding [B] the acidic compound and [C] water.

Generally speaking, a wide range of additives may be used in the present invention as additive [D] according to the desired purpose of use, with examples including thermal stabilizers, epoxy compounds, ultraviolet absorbers, mold-releasing agents, colorants, anti-static agents, slipping agents, antiblocking agents, lubricants, defogging agents, natural oils, synthetic oils, wax, organic fillers, and inorganic fillers.

Of these substances, one should preferably use substances such as the thermal stabilizers, epoxy compounds, ultraviolet light absorbers, mold-releasing agents, and colorants presented below. These substances may also be used in combinations of two or more.

Specific examples of the thermal stabilizer used in the present invention include phosphorus compounds, phenol-class stabilizers, organic thioether-class stabilizers, and hindered amine stabilizers.

Examples of the phosphorus compound which may be used include phosphoric acid, phosphorous acid, hypophosphorous acid, pyrophosphoric acid, polyphosphoric acid, phosphoric esters, and phosphorous esters.

Examples of these phosphoric esters include

trialkyl phosphates such as trimethyl phosphate, triethyl phosphate, tributyl phosphate, trioctyl phosphate, tridecyl phosphate, trioctadecyl phosphate, distearylpentaerythrityl diphosphate, tris(2-chloroethyl)phosphate, tris(2,3-dichloropropyl)phosphate, tricycloalkyl phosphates such as tricyclohexyl phosphate and triaryl phosphates such as triphenyl phosphate, tricresyl phosphate, tris(nonylphenyl) phosphate, and 2-ethylphenyldiphenyl phosphate.

Moreover, an example of the phosphorous ester is a compound having the following general formula.

$$P(OR)_3$$

(Where R indicates an alicyclic hydrocarbon group, an aliphatic hydrocarbon group, or an aromatic hydrocarbon group. These may be either identical or different.)

Examples of the compound indicated by this formula include trialkyl phosphites such as trimethyl phosphite, triethyl phosphite, tributyl phosphite, trioctyl phosphite, tris(2-ethylhexyl) phosphite, trinonyl phosphite, tridecyl phosphite, trioctadecyl phosphite, tristearyl phosphite, tris(2-chloroethyl) phosphite, and tris(2,3-dichloropropyl) phosphite,

tricycloalkyl phosphites such as tricyclohexyl phosphite,

triaryl phosphites such as triphenyl phosphite, tricresyl phosphite, tris(ethylphenyl) phosphite, tris(2,4-di-t-butylphenyl) phosphite, tris(nonylphenyl) phosphite, and tris(hydroxyphenyl) phosphite,

and aryl alkyl phosphites such as phenyl didecyl phosphite, diphenyl decyl phosphite, diphenyl isooctyl phosphite, phenyl isooctyl phosphite, and 2-ethylhexyl diphenyl phosphite.

Moreover, examples of the phosphorous ester include distearyl pentaerythrityl diphosphite and bis(2,4-di-t-butylphenyl) pentaerythrityl diphosphite.
These compounds may also be used in combinations of 2 or more.
Among these substances, a phosphorous ester having the above-mentioned formula is preferred for use, with aromatic phosphorous ester being preferred, and tris(2,4-di-t-butylphenyl) phosphite being particularly preferred.
Examples of phenolic stabilizers include n-octadecyl 3-(4-hydroxy-3',5'-di-t-butylphenyl)propionate, tetrakis [methylene-3-(3',5'-di-t-butyl-4-hydroxyphenyl)propionate]methane, 1,1,3-tris(2-ethyl-4-hydroxy-5-t-butylphenyl)butane, distearyl (4-hydroxy-3-methyl-5-t-butyl)benzylmalonate, and 4-hydroxymethyl-2,6-di-t-butylphenol.
Examples of thioether stabilizers include dilauryl thiodipropionate, distearyl thiodipropionate, dimyristyl 3,3'-thiodipropionate, ditridecyl 3,3'-thiodipropionate, and pentaerythritol tetrakis(beta-laurylthiopropionate).
Examples of the hindered amine stabilizer include

bis(2,2,6,6-tetramethyl-4-piperidyl) sebacate,
bis(1,2,2,6,6-pentamethyl-4-piperidyl) sebacate,
1-[2-{3-(3,5-di-t-butyl-1-hydroxyphenyl)propionyloxy}ethyl]-4-{3-(3,5-di-t-butyl-4-hydroxyphenyl)propionyloxy}-2,2,6,6-tetramethylpiperidyl,
8-benzyl-7,7,9,9-tetramethyl-3-octyl-1,2,3-triazaspiro[4,5]undecane-2,4-dione,
4-benzoyloxy-2,2,6,6-tetramethylpiperazine,
2-(3,5-di-t-butyl-4-hydroxybenzyl)-2-n-butyl malonate
bis(1,2,2,6,6-pentamethyl-4-piperidyl), and
tetrakis(2,2,6,6-tetramethyl-4-piperidyl)1,2,3,4-butanetetracarboxylate.

These compounds may also be used in combinations of 2 or more.
These thermal resistance stabilizers should be used in an amount of 0.001-5 parts by weight with respect to 100 parts by weight of polycarbonate, and preferably 0.005-0.5 parts by weight, with an amount of 0.01-0.3 parts by weight being particularly preferred.
Moreover, the thermal resistance stabilizer may be added in either solid or liquid form.
This thermal stabilizer should preferably be added to [A] the polycarbonate together with [B] and [C] while the polycarbonate is in a molten state, as this makes it possible to manufacture a polycarbonate which has been heated only a few times during manufacturing, and as the polycarbonate pellets obtained contain a thermal stabilizer, one can inhibit thermal decomposition during re-melting.
Moreover, as an epoxy compound, a compound is used which has one or more epoxy groups per molecule. Specific examples include the following:

epoxidized soy bean oil, epoxidized linseed oil, phenyl glycidyl ether, allyl glycidyl ether, t-butylphenyl glycidyl ether,
3,4-epoxycyclohexylmethyl 3',4'-epoxycyclohexanecarboxylate,
3,4-epoxy-6-methylcyclohexylmethyl 3',4'-epoxy-6'-methylcyclohexanecarboxylate,
2,3-epoxycyclohexylmethyl 3',4'-epoxycyclohexanecarboxylate,
4-(3,4-epoxy-5-methylcyclohexyl)butyl 3',4'-epoxycycloheanecarboxylate,
3,4-epoxycyclohexylethylene oxide, cyclohexylmethyl
3,4-epoxycyclohexanecarboxylate, 3,4-epoxy-6-methylcyclohexylmethyl
6'-methylcyclohexanecarboxylate, bisphenol A diglycidyl ether,
tetrabromobisphenol A glycidyl ether, diglycidyl ester of phthalic acid, diglycidyl esters of hexahydrophthalic acid,
bis-epoxydicyclopentadienyl ether,
bis-epoxyethylene glycol, bis-epoxycyclohexyl adipate, butadiene diepoxide,
tetraphenylethylene epoxide, octyl epoxyphthalate, epoxidized polybutadiene,
3,4-dimethyl-1,2-epoxycyclohexane, 3,5-dimethyl-1,2-epoxycyclohexane,
3-methyl-5-t-butyl-1,2-epoxycyclohexane,
octadecyl 2,2-dimethyl-3,4-epoxycyclohexanecarboxylate,
n-butyl 2,2-dimethyl-3,4-epoxycyclohexanecarboxylate,
cyclohexyl 2-methyl-3,4-epoxycycloheanecarboxylate,
n-butyl 2-isopropyl-3,4-epoxy-5-methylcyclohexanecarboxylate,
octadecyl 3,4-epoxycyclohexanecarboxylate,
2-ethylhexyl 3,'4,-epoxycyclohexanecarboxylate,
4,6-dimethyl-2,3-epoxycyclohexyl 3',4'-epoxycyclohexanecarboxylate,

4,5-epoxytetrahydrophthalic anhydride,
3-t-butyl-4,5-epoxytetrahydrophthalic anhydride,
diethyl 4,5-epoxy-cis-1,2-cyclohexanedicarboxylate, and
di-n-butyl 3-t-butyl-4,5-epoxy-cis-1,2-cyclohexanedicarboxylate.

Of the above substances, an alicyclic epoxy compound should preferably be used, with 3,4-epoxycyclohexylmethyl 3',4'-epoxycyclohexanecarboxylate being particularly preferred.
These substances may be also used in combinations of 2 or more.
This type of epoxy compound should be added in the amount of 1-2,000 ppm and preferably 10-1,000 ppm with respect to the aforementioned [A] polycarbonate.
In particular, when an epoxy compound is used as [D] the additive, one should preferably add the epoxy compound after adding [B] the acidic compound and [C] water in order to neutralize the excess [B] acidic compound. When this [B] acidic compound, which has been added in an excess amount, is neutralized with an epoxy compound, one can obtain polycarbonate which is particularly outstanding in water resistance and transparency.
There are no particular restrictions on the ultraviolet absorber used in the present invention, with an ordinary ultraviolet absorber being suitable, such as a salicylic acid ultraviolet absorber, a benzophenone ultraviolet absorber, a benzotriazole ultraviolet absorber, or a cyanoacrylate ultraviolet absorber.
Specific examples of salicylic acid ultraviolet absorbers include phenyl salicylate and p-t-butylphenyl salicylate.
Examples of benzophenone ultraviolet absorbers include

2,4-dihydroxybenzophenone, 2-hydroxy-4-methoxybenzophenone,
2,2'-dihydroxy-4-methoxybenzophenone,
2,2'-dihydroxy-4,4'-dimethoxybenzophenone,
2-hydroxy-4-methoxy-2'-carboxybenzophenone,
2-hydroxy-4-methoxy-5-sulfobenzophenone trihydrate,
2-hydroxy-4-n-octyloxybenzophenone, 2,2',4,4'-tetrahydroxybenzophenone,
4-dodecyloxy-2-hydroxybenzophenone,
bis(5-benzoyl-4-hydroxy-2-methoxyphenyl)methane, and
2-hydroxy-4-methoxybenzophenone-5-sulfonic acid.

Examples of benzotriazole ultraviolet absorbers include

2-(2'-hydroxy-5'-methylphenyl)benzotriazole,
2-(2'-hydroxy-3',5'-di-t-butylphenyl)benzotriazole,
2-(2'-hydroxy-3'-t-butyl-5'-methylphenyl)-5-chlorobenzotriazole,
2-(2'-hydroxy-3',5'-di-t-butylphenyl)-5-chlorobenzotriazole,
2-(2'-hydroxy-5'-t-octylphenyl)benzotriazole,
2-(2'-hydroxy-3',5'-di-t-amylphenyl)benzotriazole,
2-[2'-hydroxy-3'-(3'',4'',5'',6''-tetrahydrophthalimidomethyl)-5'-methylphenyl]ben zotriazole, and
2,2'-methylenebis[4-(1,1,3,3-tetramethylbutyl)-6-(2H-benzotriazol-2-yl)phenol].

Examples of cyanoacrylate ultraviolet absorbers include 2-ethylhexyl 2-cyano-3,3-diphenylacrylate and ethyl 2-cyano-3,3-diphenylacrylate. These substances may also be used in combinations of two or more.
These ultraviolet absorbers are ordinarily used in the amount of 0.001-5 parts by weight with respect to 100 parts by weight of [A] the polycarbonate, and preferably 0.005-10 parts by weight, with the amount of 0.01-0.5 parts by weight being particularly preferred.
Moreover, there are no particular restrictions on mold-releasing agents, with a generally-known mold-releasing agent being suitable.
For example, one may use hydrocarbon mold-releasing agents, including natural and synthetic paraffins, polyethylene waxes, and fluorocarbons,

fatty acid mold-releasing agents, including higher fatty acids such as stearic acid and hydroxystearic acid and oxy fatty acids,
fatty acid amine mold-releasing agents, including fatty acid amides such as stearic acid amide and ethylenebisstearamide and alkylene bis-fatty acid amide,
alcohol mold-releasing agents, including aliphatic alcohols such as stearyl alcohol and cetyl alcohol, polyvalent alcohols, polyglycol, and polyglycerol.

fatty acid ester mold-releasing agents, including fatty acid lower alcohol esters such as butyl stearate and pentaerythritol tetrastearate, fatty acid polyvalent alcohol esters, and fatty acid polyglycol esters,
or silicone mold-releasing agents, including silicone oil, and these substances may be used in combinations of two or more.

In the present invention, the mold-releasing agent should ordinarily be used in the amount of 0.001-5 parts by weight, and preferably 0.005-1 parts by weight, with respect to 100 parts by weight of the polycarbonate [A], with an amount of 0.01-0.5 parts by weight being particularly preferred.

The colorant used may be a pigment or a dye. Colorants include inorganic and organic colorants, and either may be used, or a combination of the two may be used.

Specific examples of inorganic colorants include oxides such as titanium dioxide and red iron oxide, hydroxides such as aluminum white, sulfides such as zinc sulfide, selenium, ferrocyanides such as Prussian blue, chromates such as zinc chromate and molybdenum red, sulfates such as barium sulfate, carbonates such as calcium carbonate, silicates such as ultramarine, phosphates such as manganese violet, carbons such as carbon black, and metal powder colorants such as bronze powder and aluminum powder.

Specific examples of organic colorants include nitroso colorants such as naphthol green B, nitro colorants such as naphthol yellow S, azo colorants such as lithol red, Bordeaux 10B, naphthol red, and chromophthal yellow, phthalocynine colorants such as phthalocyanine blue and fast sky blue, and condensation polycyclic colorants such as indanthrone blue, quinacridone violet, and dioxazine violet.

These colorants are ordinarily used in the amount of $1 \times 10^{-6}$ to 5 parts by weight with respect to 100 parts by weight of [A] the polycarbonate, and preferably $1 \times 10^{-5}$ to 3 parts by weight, with the amount of $1 \times 10^{-5}$ to 1 part by weight being particularly preferred.

Moreover, in the present invention, the above-mentioned [B] acidic compound, [C] water, and [D] additives are added to the polycarbonate [A] in a molten state as described above, but provided that the purpose of the invention is not impaired, these substances [B], [C], and [D] may also be diluted with polycarbonate powder and added to the polycarbonate [A], or one may add master pellets to the polycarbonate [A] which already contain high concentrations of [B], [C], and [D]. In this case, as the water absorbed by the polycarbonate powder or pellets is included, this amount of absorbed water may be subtracted from the above-mentioned [C] water before it is added.

According to the above method for manufacturing polycarbonate of the present invention, melt polycondensation of an aromatic dihydroxy compound and a carbonic acid diester can be effectively carried out in such a way that the polycondensation process does not become complex, and a high-purity aromatic dihydroxy compound may be obtained from the initial stage of the reaction. Accordingly, this method may be used to effectively manufacture polycarbonate having outstanding thermal stability, color-matching stability during molding, and outstanding transparency and water resistance.

Moreover, when additives such as acidic compounds are added to the reaction product when it is in a molten state immediately following the melt polycondensation reaction, the catalyst is stabilized, making it possible to obtain polycarbonate having improved thermal resistance, etc.

Polycarbonate manufactured by the method of the present invention can be favorably used not only in general molded materials, but in construction materials such as sheets, automobile headlight lenses, optical lenses such as glasses, and optical recording media.

Examples

The following is an explanation of the present invention with reference to practical examples, but the invention is not limited to these examples.

In the present specification, the intrinsic viscosity (IV), MFR, color matching [YI], optical transmittance, haze, retention stability, and water resistance of the polycarbonate were measured in the following manner.

Intrinsic viscosity (IV)

This was measured in methylene chloride at 20°C using an Ubbelohde viscosimeter.

MFR

This was measured at 300°C with a load of 1.2 kg according to the JIS K-7210 method.

Color matching

An injection-molded plate measuring 3 mm in thickness was molded at a cylinder temperature of 290°C, an injection pressure of 1,000 kg/cm, a cycle time of 45 seconds, and a mold temperature of 100°C, X, Y, and Z values were measured using the ND-1001 DP Colorand color difference meter manufactured by Nihon Denshoku Kogyo K. K. using the transmission method, and yellow index [YI] was measured.

$$YI = 100 (1.277 X - 1.060 Z)/Y$$

Optical transmittance

This was measured according to the ASTM D 1003 method using an injection-molded plate for color matching measurement.

Haze

The haze of an injection-molded plate for color matching measurement was measured using an NDH-200 manufactured by Nihon Denshoku Kogyo K.K.

Retention stability

After the resin was retained in the cylinder of an injection molding machine for 15 minutes at a temperature of 320°C, injection molding was carried out at this temperature, the molded plate obtained was measured for MFR and color matching (YI), and the rate of increase in MFR compared to MFR in the initial phase was calculated.

Water resistance

An injection-molded plate for color matching measurement was immersed in water in an autoclave and then maintained at 125°C in an oven for 5 days. Haze was then measured using this test piece.

Practical Example 1

Crude bisphenol A was prepared using a cation exchange resin composed of acetone and phenol [sic].
The crude bisphenol A obtained and phenol were mixed in a 1 to 5 weight ratio, this mixture was heated at 80°C to make uniform solution, it was then cooled to 42°C, and the precipitated solid was filtered in a nitrogen atmosphere. Next, the filtered solid was washed with molten phenol, and an addition compound of bisphenol A and phenol was obtained in the form of a white solid.
This addition compound is a compound consisting of bisphenol A and phenol bound in a molar ratio of 1 : 1, but as the phenol in the mixture is present in the excess amount of 0.58 moles with respect to 1 mole of the bisphenol A, the molar ratio of the bisphenol A and phenol in this mixture was 1 : 1.58.
After sodium hydroxide was added to this addition compound in the amount of $1 \times 10^{-6}$ moles with respect to 1 mole of bisphenol A, it was heated to 180°C while blowing in nitrogen, and the phenol was removed at a reduced pressure of 50 torr to obtain purified bisphenol A (BPA (1)).
Purity as measured by HPLC was 99.5% by weight or above.
0.44 kilomoles of this BPA (1) and 0.46 kilomoles of diphenylcarbonate (manufactured by Enya Co.) were placed in a 250-l tank-type agitating tank and dissolved at 140°C following nitrogen purging.
Next, the temperature of the mixture was increased to 180°C, 0.11 moles of tetramethylammonium hydroxide ($2.5 \times 10^{-4}$ moles/mole of bisphenol A) was added as a catalyst, and agitation was carried out for 30 minutes.
After this, as the temperature was increased to 210°C, the pressure was gradually decreased to 200 mmHg, and after 30 minutes, the temperature was increased to 240°C while simultaneously decreasing the pressure to 15 mmHg, and the amount of phenol distilled while temperature and pressure were kept constant was measured. The reaction was continued until the intrinsic viscosity [IV] of the reaction products obtained reached 0.15 dl/g, and the tank was then returned to atmospheric pressure using nitrogen. The time required for the reaction at 240°C was 60 minutes.
Next, these reaction products were pressurized using a gear pump, sent to a centrifuge-type thin-film evaporator, and the reaction was continued. The temperature and pressure of the thin-film evaporator were controlled to 270°C and 2 mmHg respectively. Using the gear pump, the mixture was sent from the lower portion of the evaporator at a rate of 40 kg/hour into a biaxial horizontal agitation polymerization tank (L/D = 3, agitation vane rotation diameter

220 mm, internal volume 80 l) controlled to a temperature of 295°C and a pressure of 0.2 mmHg and polymerization was carried out with a dwell time of 30 minutes.

Next, with the mixture in a molten state, the polymer was sent using the gear pump into a biaxial extruder (L/D = 17.5, barrel temperature 285°C), and an amount of butyl p-toluenesulfonate greater by a molar factor of 2 than the amount of sodium hydroxide and 100 ppm of distilled water with respect to the resin were kneaded, and the mixture was made into strands by passing through a dye and then cut into pellets using a cutter.

The intrinsic viscosity [IV] of the polymer obtained was 0.49 dl/g.

These results are shown in Table 1.

Comparison Example 1

Pellets were obtained by the same method as in Practical Example 1, except that the addition compound of bisphenol A and phenol obtained in Practical Example 1 was used with the bisphenol A being present in the amount of 0.44 kilomoles, this mixture was placed in a 250-1 tank-type agitating tank together with 0.46 kilomoles of diphenyl carbonate (manufactured by Enya Co.), and after nitrogen purging, it was dissolved at 140°C, the temperature was increased to 180°C, 0.11 moles of tetramethylammonium hydroxide was added as a catalyst (2.5 x $10^{-4}$ moles/mole of bisphenol A) and 0.00044 moles of sodium hydroxide (1 x $10^{-6}$ moles/mole of bisphenol A), and stirring was carried out for 30 minutes.

The results are shown in Table 1.

Comparison Example 2

Sodium hydroxide was not added to the addition compound of bisphenol A and phenol obtained in Practical Example 1, and after heating to 180°C while blowing in nitrogen, the phenol was removed at a reduced pressure of 50 torr to obtain purified bisphenol A (BPA (2)). Purity as measured by HPLC was 99.5% by weight or above.

0.44 moles of this BPA (2) and 0.46 kilomoles of diphenyl carbonate (manufactured by Enya Co.) were placed in a 250-l tank-type agitating tank, and after purging with nitrogen and dissolution at 140°C, the temperature was increased to 180°C, 0.11 moles of tetramethylammonium hydroxide was added as a catalyst (2.5 x $10^{-4}$ moles/mol of bisphenol A), 0.00044 moles of sodium hydroxide (1 x $10^{-6}$ moles/mol of bisphenol A) was added, and agitation was carried out for 30 minutes. Otherwise, pellets were obtained by the same method as in Practical Example 1.

The results are shown in Table 1.

Practical Examples 2-3

Pellets were obtained by the same method as in Practical Example 1, except for the fact that the sodium hydroxide used in Practical Example 1 was used in the amounts shown in Table 1.

The results are shown in Table 1.

Practical Examples 3-5

Pellets were obtained by the same method as in Comparison Example 1, except for the fact that the sodium hydroxide used in Comparison Example 1 was used in the amounts shown in Table 1.

The results are shown in Table 1.

Practical Examples 4-6

Pellets were obtained by the same method as in Comparison Example 2, except for the fact that the sodium hydroxide used in Comparison Example 2 was used in the amounts shown in Table 1.

The results are shown in Table 1.

Practical Example 4

Except for the fact that 300 ppm of tris(2,4-di-t-butylphenyl) phosphite (Mark 2112: manufactured by Adeka Gas Co.) and 300 ppm of 3,4-epoxycyclohexylmethyl 3',4'-epoxycyclohexanecarboxylate (Seloxide 2021P: manufactured by Daicel Kagaku Co.) were kneaded in together with an amount of butyl p-toluenesulfonate greater by a molar factor of 2 than the amount of sodium hydroxide and the 100 ppm of water with respect to resin added in Practical Example 1, tablets were obtained by the same method as in Practical Example 1.

The results are shown in Table 1.

Comparison Example 7

Except for the fact that 300 ppm of tris(2,4-di-t-butylphenyl) phosphite (Mark 2112: manufactured by Adeka Gas Co.) and 300 ppm of 3,4-epoxycyclohexylmethyl 3',4'-epoxycyclohexanecarboxylate (Seloxide 2021P: manufactured by Daicel Kagaku Co.) were kneaded in together with an amount of butyl p-toluenesulfonate greater by a molar factor of 2 than the amount of sodium hydroxide and the 100 ppm of water with respect to resin added in Comparison Example 1, tablets were obtained by the same method as in Comparison Example 1.
The results are shown in Table 1.

Comparison Example 8

Except for the fact that 300 ppm of tris(2,4-di-t-butylphenyl) phosphite (Mark 2112: manufactured by Adeka Gas Co.) and 300 ppm of 3,4-epoxycyclohexylmethyl 3',4'-epoxycyclohexanecarboxylate (Seloxide 2021P: manufactured by Daicel Kagaku Co.) were kneaded in together with an amount of butyl p-toluenesulfonate greater by a molar factor of 2 than the amount of sodium hydroxide and the 100 ppm of water with respect to resin added in Comparison Example 2, tablets were obtained by the same method as in Comparison Example 2.
The results are shown in Table 1.

Table 1

| | Practice Example 1 | Comparison Example 1 | Comparison Example 2 |
|---|---|---|---|
| Aromatic dihydroxy compound | BPA (1) | Addition compound of BPA and phenol | BPA (2) |
| Catalysts<br>(a) Alkali compound<br>Amount used (x $10^{-7}$ moles/BPA)<br>Addition method<br><br>(b) Nitrogen-containing compound<br>Amount used (x $10^{-4}$ moles/BPA) | <br>NaOH<br>10<br>Added in advance to raw material BPA<br><br>Tetramethylammonium hydroxide<br>2.5 | <br>NaOH<br>10<br>Directly added to mixture of addition compound and DPC<br>Tetramethylammonium hydroxide<br>2.5 | <br>NaOH<br>10<br>Directly added to mixture of BPA and DPC<br>Tetramethylammonium hydroxide<br>2.5 |
| Time required to reach IV of 0.15 dl/g (240°C) (minutes) | 60 | 80 | 60 |
| [B] Acidic compound<br>Amount used (mole factor/catalyst (a)) | p-butyltoluenesulfonic acid<br>2.0 | p-butyltoluenesulfonic acid<br>2.0 | p-butyltoluenesulfonic acid<br>2.0 |
| [C] WaterAmount used (ppm) | 100 | 100 | 100 |
| Initial-stage properties<br>[IV] (dl/g)<br>MFR (g/10 minutes)<br>YI<br>Optical transmittance (%)<br>Haze | <br>0.49<br>10.3<br>1.23<br>90.8<br>0.2 | <br>0.49<br>10.3<br>1.45<br>90.8<br>0.2 | <br>0.49<br>10.3<br>1.83<br>90.8<br>0.2 |
| Retention stability<br>MFR (g/10 minutes)<br>MFR increase rate (%)<br>YI | <br>10.5<br>2<br>1.33 | <br>10.5<br>2<br>1.56 | <br>10.5<br>2<br>2.12 |
| Water-resistance Haze | 1.7 | 2.0 | 2.7 |

DPC: Diphenyl carbonate

Table 1 (cont. 1)

| | Practice Example 2 | Comparison Example 3 | Comparison Example 4 |
|---|---|---|---|
| Aromatic dihydroxy compound | BPA (1) | Addition compound of BPA and phenol | BPA (2) |
| Catalysts<br>(a) Alkali compound<br>Amount used (x $10^{-7}$ moles/BPA)<br>Addition method<br><br>(b) Nitrogen-containing compound<br>Amount used (x $10^{-4}$ moles/BPA) | NaOH<br>5<br>Added in advance to raw material BPA<br><br>Tetramethylammonium hydroxide<br>2.5 | NaOH<br>5<br>Directly added to mixture of addition compound and DPC<br>Tetramethylammonium hydroxide<br>2.5 | NaOH<br>5<br>Directly added to mixture of BPA and DPC<br>Tetramethylammonium hydroxide<br>2.5 |
| Time required to reach IV of 0.15 dl/g (240°C) (minutes) | 65 | 95 | 65 |
| [B] Acidic compound<br>Amount used (mole factor/catalyst (a)) | p-butyltoluenesulfonic acid<br>2.0 | p-butyltoluenesulfonic acid<br>2.0 | p-butyltoluenesulfonic acid<br>2.0 |
| [C] WaterAmount used (ppm) | 100 | 100 | 100 |
| Initial-stage properties<br>[IV] (dl/g)<br>MFR (g/10 minutes)<br>YI<br>Optical transmittance (%)<br>Haze | <br>0.49<br>10.3<br>1.13<br>90.8<br>0.2 | <br>0.49<br>10.3<br>1.36<br>90.8<br>0.2 | <br>0.49<br>10.3<br>1.62<br>90.8<br>0.2 |
| Retention stability<br>MFR (g/10 minutes)<br>MFR increase rate (%)<br>YI | <br>10.5<br>2<br>1.21 | <br>10.5<br>2<br>1.48 | <br>10.5<br>2<br>1.89 |
| Water-resistance Haze | 1.2 | 1.5 | 1.8 |

DPC: Diphenyl carbonate

Table 1 (cont. 2)

| | Practice Example 3 | Comparison Example 5 | Comparison Example 6 |
|---|---|---|---|
| Aromatic dihydroxy compound | BPA (1) | Addition compound of BPA and phenol | BPA-(2) |
| Catalysts<br>(a) Alkali compound<br>Amount used ($x 10^{-7}$ moles/BPA)<br>Addition method<br><br>(b) Nitrogen-containing compound<br>Amount used ($x 10^{-4}$ moles/BPA) | <br>NaOH<br>20<br>Added in advance to raw material BPA<br><br>Tetramethylammonium hydroxide<br>2.5 | <br>NaOH<br>20<br>Directly added to mixture of addition compound and DPC<br>Tetramethylammonium hydroxide<br>2.5 | <br>NaOH<br>20<br>Directly added to mixture of BPA and DPC<br>Tetramethylammonium hydroxide<br>2.5 |
| Time required to reach IV of 0.15 dl/g (240°C) (minutes) | 45 | 70 | 45 |
| [B] Acidic compound<br>Amount used (mole factor/catalyst (a)) | p-butyltoluenesulfonic acid<br>2.0 | p-butyltoluenesulfonic acid<br>2.0 | p-butyltoluenesulfonic acid<br>2.0 |
| [C] WaterAmount used (ppm) | 100 | 100 | 100 |
| Initial-stage properties<br>[IV] (dl/g)<br>MFR (g/10 minutes)<br>YI<br>Optical transmittance (%)<br>Haze | <br>0.49<br>10.3<br>1.42<br>90.8<br>0.2 | <br>0.49<br>10.3<br>1.65<br>90.8<br>0.2 | <br>0.49<br>10.3<br>2.07<br>90.7<br>0.3 |
| Retention stability<br>MFR (g/10 minutes)<br>MFR increase rate (%)<br>YI | <br>10.8<br>5<br>1.53 | <br>10.9<br>6<br>1.80 | <br>11.1<br>8<br>2.43 |
| Water-resistance Haze | 2.8 | 3.1 | 3.9 |

DPC: Diphenyl carbonate

Table 1 (cont. 3)

| | Practice Example 4 | Comparison Example 7 | Comparison Example 8 |
|---|---|---|---|
| Aromatic dihydroxy compound | BPA (1) | Addition compound of BPA and phenol | BPA (2) |
| Catalysts<br>(a) Alkali compound<br>Amount used (x $10^{-7}$ moles/BPA)<br>Addition method | NaOH<br>10<br>Added in advance to raw material BPA | NaOH<br>10<br>Directly added to mixture of addition compound and DPC | NaOH<br>10<br>Directly added to mixture of BPA and DPC |
| (b) Nitrogen-containing compound<br>Amount used (x $10^{-4}$ moles/BPA) | Tetramethylammonium hydroxide<br>2.5 | Tetramethylammonium hydroxide<br>2.5 | Tetramethylammonium hydroxide<br>2.55 |
| Time required to reach IV of 0.15 dl/g (240°C) (min) | 60 | 80 | 60 |
| [B] Acidic compound<br>Amount used (mole factor/catalyst (a)) | p-butyltoluenesulfonic acid<br>2.0 | p-butyltoluenesulfonic acid<br>2.0 | p-butyltoluenesulfonic acid<br>2.0 |
| [C] Water<br>Amount used (ppm) | 100 | 100 | 100 |
| [D] Additives<br>Phosphorus compound(ppm)<br>Epoxy compound (ppm) | 300<br>300 | 300<br>300 | 300<br>300 |
| Time required to reach IV of 0.15 dl/g (240°C) (min) | 60 | 80 | 60 |
| Initial-stage properties<br>[IV] (dl/g)<br>MFR (g/10 minutes)<br>YI<br>Optical transmittance (%)<br>Haze | 0.49<br>10.3<br>1.12<br>90.8<br>0.3 | 0.49<br>10.3<br>1.33<br>90.8<br>0.3 | 0.49<br>10.3<br>1.61<br>90.8<br>0.3 |
| Retention stability<br>MFR (g/10 minutes)<br>MFR increase rate (%)<br>YI | 10.8<br>5<br>1.19 | 11.0<br>7<br>1.41 | 11.3<br>10<br>1.72 |
| Water-resistance Haze | 1.5 | 1.7 | 2.0 |

DPC: Diphenyl carbonate

## Claims

1. A method for manufacturing polycarbonate which comprises melt polycondensing an aromatic dihydroxy compound and a carbonic acid diester in the presence of a polycondensation catalyst, comprising:

(a) forming an addition compound or a mixture of said addition compound and an aromatic hydroxy compound from an aromatic dihydroxy compound and an aromatic monohydroxy compound;

(b) adding an alkali metal compound or alkaline earth metal compound as a catalyst in a catalytic amount to the addition compound or the mixture;
(c) dispersing or dissolving the catalyst in the addition compound or the mixture;
(d) removing the aromatic monohydroxy compound from the addition compound or the mixture; and
(e) melt polycondensing the aromatic dihydroxy compound obtained from step d) and the carbonic acid diester melt in the presence of the alkali metal compound or alkaline earth metal compound dissolved or dispersed in said aromatic dihydroxy compound to polycarbonate.

**2.** The method of claim 1 wherein a sulfur-containing acidic compound having a pKa value of 3 or less or a derivative formed from said acidic compound is added to the polycarbonate obtained in the step (e) in the molar ratio of 1-20 based on the catalytic amount of the alkali metal compound or alkaline earth compound added in the step (b), while the polycarbonate is in a molten state.

**3.** The method of claim 2 wherein the sulfur-containing acidic compound has the formula

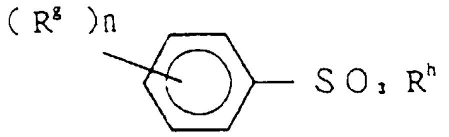

... [III]

wherein $R^g$ is a hydrocarbon group with 1-50 carbon atoms which may be halogen-substituted, $R^h$ is a hydrogen atom or a hydrocarbon group having 1-50 carbon atoms which may be halogen-substituted, and n is an integer from 0 to 3.

**4.** The method of claim 2 wherein water is added to the polycarbonate in an amount of 5-1,000 ppm with respect to the polycarbonate.

**5.** The method of claim 1 wherein the alkali metal compound or alkaline earth metal compound is present in the amount of $5x10^{-8}$ to $2x10^{-6}$ mole with respect to 1 mole of the aromatic dihydroxy compound.

**6.** The method of claim 1 wherein the aromatic dihydroxy compound and the carbonic acid diester are melt polycondensed in the presence of a catalyst comprising the alkali metal metal compound or alkaline earth metal compound and a nitrogen-containing basic compound.

**7.** The method of claim 1 wherein the purity of the aromatic dihydroxy compound after removal of the aromatic monohydroxy compound is at least 99% by weight as measured by high-performance liquid chromatography.

**Patentansprüche**

**1.** Verfahren zur Herstellung von Polycarbonat, bei welchem man eine aromatische Dihydroxyverbindung und einen Kohlensäurediester in Gegenwart eines Polykondensationskatalysators polykondensiert, wobei man:

(a) eine Additionsverbindung oder eine Mischung der Additionsverbindung und einer aromatischen Hydroxyverbindung aus einer aromatischen Dihydroxyverbindung und einer aromatischen Monohydroxyverbindung bildet;

(b) eine Alkalimetallverbindung oder Erdalkalimetallverbindung als Katalysator in einer katalytischen Menge zu der Additionsverbindung oder der Mischung zufügt;

(c) den Katalysator in der Additionsverbindung oder der Mischung dispergiert oder löst;

(d) die aromatische Monohydroxyverbindung aus der Additionsverbindung oder der Mischung entfernt; und

(e) die im Schritt (d) erhaltene aromatische Dihydroxyverbindung und die Kohlensäurediesterschmelze in Gegenwart der Alkalimetallverbindung oder Erdalkalimetallverbindung, die in der aromatischen Dihydroxyverbindung gelöst oder dispergiert ist, zu Polycarbonat schmelzpolykondensiert.

**2.** Verfahren gemäß Anspruch 1, dadurch gekennzeichnet, daß eine schwefelhaltige saure Verbindung, die einen pKa-Wert von 3 oder kleiner hat oder ein aus der sauren Verbindung gebildetes Derivat, dem in Schritt (e) erhaltenen Polycarbonat in einem Molverhältnis von 1 bis 20, bezogen auf die katalytische Menge der Alkalimetallverbindung oder Erdalkalimetallverbindung, die in Schritt (b) zugefügt wurde, zusetzt, während das Polycarbonat im geschmolzenen Zustand ist.

**3.** Verfahren gemäß Anspruch 2, dadurch gekennzeichnet, daß die schwefelhaltige saure Verbindung die Formel hat:

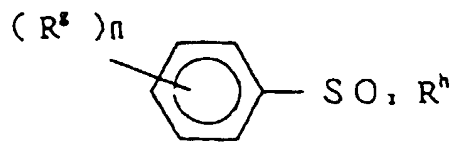

worin $R^g$ eine Kohlenwasserstoffgruppe mit 1 bis 50 Kohlenstoffatomen, die ggf. halogensubstituiert sind, ist, $R^h$ ein Wasserstoffatom oder eine Kohlenwasserstoffgruppe mit 1 bis 50 Kohlenstoffatomen, die ggf. halogensubstituiert sein können, ist und n eine ganze Zahl von 0 bis 3 ist.

**4.** Verfahren gemäß Anspruch 2, dadurch gekennzeichnet, daß dem Polycarbonat Wasser in einer Menge von 5 bis 1.000 ppm, bezogen auf das Polycarbonat, zugefügt wird.

**5.** Verfahren gemäß Anspruch 1, dadurch gekennzeichnet, daß die Alkalimetallverbindung oder Erdalkalimetallverbindung in einer Menge von 5 x $10^{-8}$ bis 2 x $10^{-6}$ Mol vorhanden ist, bezogen auf 1 Mol der aromatischen Dihydroxyverbindung.

**6.** Verfahren gemäß Anspruch 1, dadurch gekennzeichnet, daß die aromatische Dihydroxyverbindung und der Kohlensäurediester in Gegenwart eines Katalysators schmelzpolykondensiert werden, der die Alkalimetallverbindung oder Erdalkalimetallverbindung und eine stickstoffhaltige basische Verbindung aufweist.

**7.** Verfahren gemäß Anspruch 1, dadurch gekennzeichnet, daß die Reinheit der aromatischen Dihydroxyverbindung nach Entfernung der aromatischen Monohydroxyverbindung wenigstens 99 Gew.-% ist, gemessen durch Hochleistungsflüssigchromatographie (HPLC).

**Revendications**

**1.** Procédé de fabrication d'un polycarbonate, qui comprend une polycondensation en fusion d'un composé aromatique dihydroxylé et d'un diester d'acide carbonique en présence d'un catalyseur de polycondensation, comprenant :

(a) la formation d'un composé d'addition ou d'un mélange dudit composé d'addition et d'un composé aromatique hydroxylé, à partir du composé aromatique dihydroxylé et d'un composé aromatique monohydroxylé ;
(b) l'addition d'un composé de métal alcalin ou d'un composé de métal alcalino-terreux, comme catalyseur, en une quantité catalytique au composé d'addition ou à son mélange ;
(c) la dispersion ou la dissolution du catalyseur dans le composé d'addition ou dans son mélange ;
(d) l'élimination du composé aromatique monohydroxylé du composé d'addition ou de son mélange ; et
(e) la polycondensation en fusion du composé aromatique dihydroxylé obtenu dans l'étape (d) et du diester d'acide carbonique fondus en présence du composé de métal alcalin ou du composé de métal alcalino-terreux dissous ou dispersé dans ledit composé aromatique dihydroxylé, de manière à obtenir un polycarbonate.

**2.** Procédé selon la revendication 1, dans lequel on ajoute un composé acide soufré présentant une valeur de pKa de 3 ou moins, ou un dérivé formé à partir dudit composé acide, au polycarbonate obtenu dans l'étape (e) en un

rapport molaire de 1 à 20 par rapport à la quantité catalytique du composé de métal alcalin ou du composé de métal alcalino-terreux ajouté dans l'étape (b), tandis que le polycarbonate se trouve à l'état fondu.

**3.** Procédé selon la revendication 2, dans lequel le composé acide soufré répond à la formule :

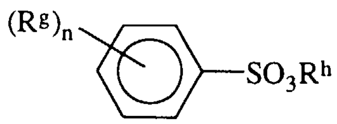 .....[III]

dans laquelle $R^g$ représente un groupe hydrocarboné comportant de 1 à 50 atomes de carbone et pouvant halogéné, $R^h$ représente un atome d'hydrogène ou un groupe hydrocarboné comportant de 1 à 50 atomes de carbone et pouvant être halogéné, et n représente un nombre entier allant de 0 à 3.

**4.** Procédé selon la revendication 2, dans lequel on ajoute de l'eau au polycarbonate en une quantité de 5 à 1 000 ppm par rapport au polycarbonate.

**5.** Procédé selon la revendication 1, dans lequel le composé de métal alcalin ou le composé de métal alcalino-terreux est présent en une quantité de $5 \times 10^{-8}$ à $2 \times 10^{-6}$ mole par rapport à 1 mole de composé aromatique dihydroxylé.

**6.** Procédé selon la revendication 1, dans lequel on soumet à une polycondensation en fusion un composé aromatique dihydroxylé et un diester d'acide carbonique en présence d'un catalyseur comprenant un composé de métal alcalin ou un composé de métal alcalino-terreux, et un composé basique azoté.

**7.** Procédé selon la revendication 1, dans lequel la pureté du composé aromatique dihydroxylé après élimination du composé aromatique monohydroxylé vaut au moins 99 % en poids, telle que mesurée par chromatographie liquide haute pression.

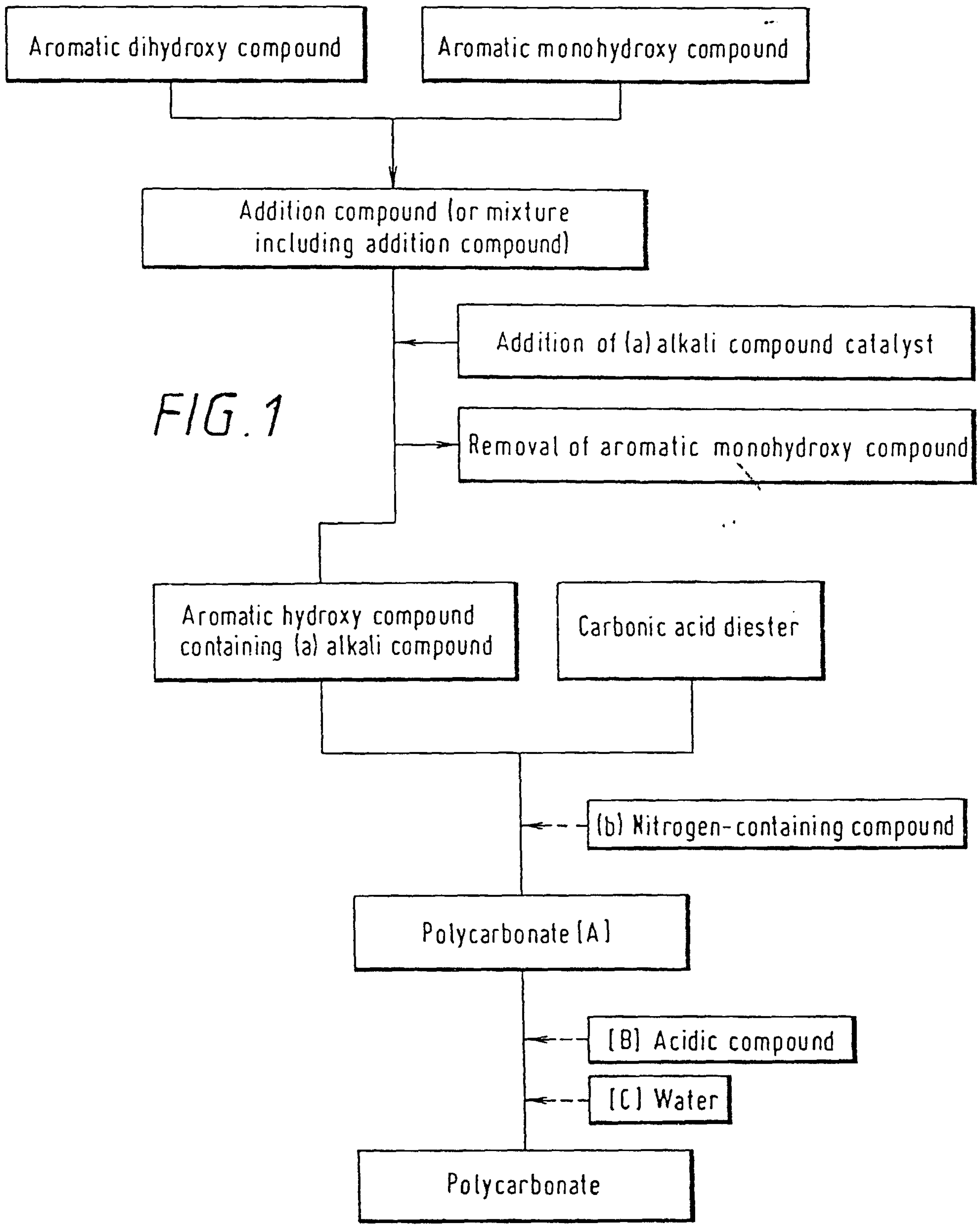
Aromatic dihydroxy compound
Aromatic monohydroxy compound
Addition compound (or mixture including addition compound)
Addition of (a) alkali compound catalyst
Removal of aromatic monohydroxy compound
Aromatic hydroxy compound containing (a) alkali compound
Carbonic acid diester
(b) Nitrogen-containing compound
Polycarbonate (A)
(B) Acidic compound
(C) Water
Polycarbonate

FIG.1